# EUROPÄISCHE PATENTANMELDUNG

(11) **EP 2 290 281 A2**
(43) Veröffentlichungstag der Anmeldung: **02.03.2011**
(21) Anmeldenummer: 10000761.6
(22) Anmeldetag: 26.01.2010
(51) Int. Cl.: F21S 8/10

(54) **Leuchtmittel sowie Leuchte**

(30) Priorität: 25.08.2009 DE 102009038523
(71) Anmelder: odelo GmbH, 71409 Schwaikheim (DE)
(72) Erfinder: Kunze, Joe, 47441 Moers (DE); Olkay, Cem, 58454 Witten (DE)
(74) Vertreter: Meyer, Thorsten

(57) **Zusammenfassung**

Es wird ein Leuchtmittel (01) mit mindestens einem LED-Chip (03; LED: Lichtemittierende-Diode) und mindestens einem angespritzten Lichtleiter (02) beschrieben, bei welchem Leuchtmittel (01) der mindestens eine LED-Chip (03) auf einem Leadframe (04) angeordnet und elektrisch kontaktiert ist. Der Leadframe (04) ist wenigstens im Bereich eines LED-Chips (03) zumindest zum Teil von mindestens einem zumindest einem LED-Chip (03) zugeordneten Lichtleiter (02) umspritzt. Darüber hinaus wird eine Leuchte, insbesondere Heckleuchte für ein Kraftfahrzeug mit einem solchen Leuchtmittel (01) beschrieben.

## Beschreibung

Die Erfindung betrifft ein Leuchtmittel mit mindestens einem LED-Chip (LED; Lichtemittierende Diode) und einem angespritzten Lichtleiter gemäß dem Oberbegriff des Anspruchs 1, sowie eine mit mindestens einem solchen Leuchtmittel versehene Leuchte nach dem Oberbegriff des Anspruchs 15.

Eine Leuchte erfüllt z.B. bei einem Kraftfahrzeug je nach Ausgestaltung verschiedene Aufgaben bzw. Funktionen, wie beispielsweise bei einer Ausgestaltung als Scheinwerfer eine die Fahrbahn ausleuchtende Funktion, oder bei einer Ausgestaltung als Signalleuchte eine Signalfunktion, wie beispielsweise zur Fahrtrichtungsanzeige oder Anzeige einer Bremstätigkeit, oder einer Sicherstellung einer Sichtbarkeit des Kraftfahrzeugs bei Tag und/oder Nacht. Beispiele für Leuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central High-Mounted Braking Lights, Tagfahrleuchten, Scheinwerfer und auch als Abbiege- oder Kurvenlicht verwendete Nebelscheinwerfer, sowie Kombinationen hiervon.

Eine Leuchte z.B. für ein Kraftfahrzeug besteht im Wesentlichen aus einem Gehäuse, gegebenenfalls mindestens einem darin angeordneten Reflektor, mindestens einem typischerweise vor dem gegebenenfalls vorhandenen mindestens einen Reflektor angeordneten Leuchtmittel, sowie einer den gegebenenfalls vorhandenen Reflektor und das Leuchtmittel gegen Witterungseinflüsse schützenden, kurz auch als Lichtscheibe bezeichneten transparenten Abdeckung, welche gemeinsam mit dem Gehäuse einen den gegebenenfalls vorhandenen Reflektor und das Leuchtmittel aufnehmenden Raum umschließt. Das Gehäuse bzw. der Raum kann dabei in mehrere Kammern mit jeweils eigenen Leuchtmitteln, gegebenenfalls eigenen Reflektoren sowie gegebenenfalls eigenen Lichtscheiben unterteilt sein, von denen jede Kammer eine andere der oben beschriebenen Funktionen erfüllen kann.

Grundsätzlich kann auch das Gehäuse selbst oder ein Teil des Gehäuses den oder einen Reflektor bilden bzw. kann der Reflektor Teil des Gehäuses sein.

Als Leuchtmittel kommen z.B. in Kraftfahrzeugen beispielsweise Glühlampen, Gasentladungslampen und vermehrt auch einzeln oder gruppenweise angeordnete Leuchtdioden zum Einsatz.

Außerdem werden immer öfter Lichtleiter z.B. im Außenbereich einer auch als Automobilleuchte bezeichneten Leuchte eines Kraftfahrzeugs eingesetzt, da hierdurch z.B. größere zur Lichtabstrahlung vorgesehene Flächen und homogene Designs verwirklicht werden können.

Hierzu wird Licht von einem oder mehreren Leuchtmitteln, bevorzugt Leuchtdioden, an einer oder mehreren Einkoppelstellen eingekoppelt und durch Totalreflexion im Lichtleiter transportiert. Beispielsweise durch geometrische Maßnahmen wird das eingekoppelte Licht gezielt an einer oder mehreren Flächen oder Flächenabschnitten ausgekoppelt, so dass es den Lichtleiter verlässt. Die zumindest eine Einkoppelstelle ist sehr sensitiv auf die Positioniergenauigkeit zwischen Lichtquelle und Lichtleiter. Eine Fehlpositionierung geht dabei auf Kosten der Einkoppeleffizienz und damit der Effizienz des optischen Systems.

Bislang werden Lichtleiter und Leuchtdioden, die z.B. in Automobil-Heckleuchten oder in Spiegelblinkern verwendet werden, als einzelne Teile gegeneinander positioniert. Die Toleranzen der Positioniergenauigkeit zwischen den einzelnen Teilen, wie etwa Leuchtdiode in Lötpunkte gegen Platine, Platine gegen Gehäuse bzw. Halterung sowie Lichtleiter gegen Gehäuse bzw. Halterung addieren sich bei dieser Art der Montage auf. Dies kann zu erheblichen Lichtverlusten im optischen System führen.

Durch DE 199 09 242 A1 ist ein optoelektronisches Modul bekannt. Es besteht aus einem von einem Formkörper umgebenen Träger. Der Formkörper hat eine der Kopplung mit einem Kopplungspartner des optoelektronischen Moduls dienenden Funktionsfläche. Der Formkörper selbst ist von einem als verlorene Giesform ausgebildeten Modulgehäuse umgeben. Zur Herstellung des Moduls wird zunächst der Träger zusammengesetzt, indem ein elektrooptischer Wandler, z.B. ein LED-Chip, exakt auf einem Lead-Frame positioniert und über elektrische Leiter elektrisch kontaktiert wird. Bei einem Lead-Frame handelt es sich um einen beispielsweise durch DE 203 02356 U1 bekannten Metallträger zur Kontaktierung elektrischer oder optoelektrischer Bauelemente mit einer Vielzahl von Kontaktbeinchen, die jeweils mit einem Ende eines Bonddrahts zur Kontaktierung eines Bauelements verbindbar sind. Nachdem der Träger zusammengebaut worden ist, wird der Träger in dem als verlorene Giesform dienenden Modulgehäuse positioniert, welches eine Öffnung zum Einführen des Trägers sowie ein Gehäuseteil aufweist, das an seiner inneren Seite entsprechend einer Außenkontur einer der Kopplung mit einem Kopplungspartner des optoelektronischen Moduls dienenden Funktionsfläche gestaltet ist. Anschließend wird der Formkörper gebildet, indem ein formbares Material in das Modulgehäuse gefüllt wird.

Dadurch wird zwar eine genaue Ausrichtung zwischen z.B. einem in dem Formkörper untergebrachten LED-Chip und der Funktionsfläche erreicht, welche Funktionsfläche z.B. mit einer Einkoppelfläche eines Lichteiters gekoppelt werden kann, wohingegen aber wiederum eine Toleranz der Positioniergenauigkeit zwischen der Lichtquelle, wie z.B. dem von dem Formkörper umgebenen LED-Chip, und dem Lichtleiter die Effizienz des optischen Systems beeinträchtigt.

Durch DE 10 2004 046 386 A1 ist bekannt, eine Leuchtdiode bestehend aus einem mit Lötbeinchen versehenen und von einem Formkörper umspritzten LED-Chip vom Material eines Lichtleiters zu umspritzen. Hierdurch bildet das entsprechende Ende des Lichtleiters keine Lichteintrittsfläche und damit keine auf die Positioniergenauigkeit zwischen Lichtquelle und Lichtleiter sensitive Einkoppelstelle, da das Licht innerhalb des Lichtleiters aus dem Leuchtmittel tritt.

Da die vom Material des Lichtleiters umspritzte Leuchtdiode jedoch nur sehr dünn ausgeformte Lötbeinchen aufweist, bedeutet das direkte Anspritzen eines Lichtleiters an eine herkömmliche Leuchtdiode eine hohe Instabilität, eine schlechte Positionierbarkeit und erschwertes Handling beim so genannten Elektronikbestücken, bei dem Platinen oder mit Leiterbahnen versehene Partien einer Leuchte mit Leuchtdioden und anderen elektrischen und/oder elektronischen Bauteilen bestückt werden. Wegen der instabilen Beinchen der aus dem Stand der Technik bekannten Leuchtdioden mit angespritzten Lichtleitern können beispielsweise für die Elektronikbestückung keine so genannten Standardbestücker verwendet werden. Dieser Nachteil macht bislang Leuchtdioden mit angespritzten Lichtleitern unbrauchbar, um die unmittelbar zu Verlusten im optischen System führenden Toleranzen innerhalb der Toleranzkette einzugrenzen bzw. in den Griff zu bekommen.

Der Erfindung liegt die Aufgabe zugrunde, ein Leuchtmittel sowie eine Leuchte mit einem solchen Leuchtmittel zu entwickeln, welches bzw. welche im Vergleich zum Stand der Technik eine höhere Effizienz des optischen Systems aufweist.

Die Aufgabe wird gelöst durch die Merkmale des Anspruchs 1 bzw. durch die Merkmale des Anspruchs 15.

Ein erster Gegenstand der Erfindung betrifft demnach ein Leuchtmittel, insbesondere ein Leuchtmittel für eine Leuchte für ein Kraftfahrzeug, insbesondere eine Heckleuchte, welches Leuchtmittel mindestens einen LED-Chip (LED: Lichtemittierende-Diode) und mindestens einen angespritzten Lichtleiter umfasst. Erfindungsgemäß ist bei einem solchen Leuchtmittel vorgesehen, dass der mindestens eine LED-Chip auf einem Leadframe angeordnet und elektrisch kontaktiert ist, und dass das Leadframe wenigstens im Bereich eines LED-Chips zumindest zum Teil von mindestens einem zumindest einem LED-Chip zugeordneten Lichtleiter umspritzt ist.

Die Erfindung löst das Problem der sich aufaddierenden Toleranzen bei der Positionierung von LED-Chip zu Lichtleiter. Weitere Vorteile der Erfindung gegenüber dem Stand der Technik ergeben sich unter anderem dadurch, dass durch die Verwendung eines Leadframes das erfindungsgemäße Leuchtmittel im Vergleich zu herkömmlichen LEDs dickere Beinchen für die Bestromung des zumindest einen LED-Chips aufweist. Gleichzeitig ermöglicht die Spritzgusstechnologie eine flexible Wahl des Leadframes. Es können somit LED-Beinchen mit höherer Stärke umspritzt werden, was zu einer höheren mechanischen Stabilität des gesamten Leuchtmittels an sich führt, bei gleichzeitig verbesserter thermischer Belastbarkeit durch eine verbesserte Wärmeabfuhr über die Beinchen mit höherer Stärke. Zusammengefasst weisen die LED-Chips durch die Verwendung eines Leadframes zu deren Bestromung dickere Beinchen auf, als z.B. herkömmliche Leuchtdioden. Dies hat im Vergleich mit den aus dem Stand der Technik bekannten Leuchtdioden mit angespritzten Lichtleitern eine verbesserte mechanischen Stabilität zur Folge, wodurch im Vergleich zum Stand der Technik ein wesentlich einfacherer und im Ergebnis genauerer Umgang mit dem erfindungsgemäßen Leuchtmittels mit angespritztem Lichtleiter möglich ist. Durch die bei einem Leadframe im Vergleich zu herkömmlichen Leuchtdioden verstärkten Beinchen wird eine verbesserte Wärmeabfuhr bzw. Kühlung der LED-Chips erreicht, was dem erfindungsgemäßen Leuchtmittel im Vergleich zu herkömmlichen Leuchtdioden eine geringere thermische Degradation beschert. Durch die bei einem Leadframe im Vergleich zu herkömmlichen Leuchtdioden verstärkten Beinchen ist es außerdem auch möglich, LED-Chips höher zu bestromen, z.B. wenn hohe Lichtleistungen gefordert sind, z.B. um auch flächig ausgeformte Lichtleiter ausleuchten zu können, da durch die relativ dicken Beinchen eine im Vergleich bessere Wärmeabfuhr bzw. Kühlung der LED-Chips erfolgt.

Die Erfindung eignet sich beispielsweise für hochgesetzte Bremsleuchten, da dank der Erfindung lediglich ein Lichtleiter mit einem LED-Chip zur Lichteinkopplung verwendet werden kann statt bisher aufgrund der Flächenanforderung mehrere Leuchtdioden oder LED-Chips auf einer flächigen Platine.

Es ist ersichtlich, dass durch die vorliegende Erfindung das Problem der sich aufaddierenden Toleranzkette in jedem Fall dadurch gelöst wird, indem der Lichtleiter direkt an eine Spritzguss-Leuchtdiode angespritzt wird bzw. indem ein auf einem Leadframe positionierter und elektrisch kontaktierter LED-Chip direkt von einem Lichtleiter umspritzt wird. Hierdurch entsteht eine direkte Verbindung zwischen LED-Chip und Lichtleiter, so dass die Positionierung der beiden Komponenten zueinander durch die geringe Toleranz des Spritzgusswerkzeugs bestimmt wird. Die Erfindung erreicht eine höhere Effizienz des optischen Systems durch Eingrenzung der Toleranzen innerhalb der Toleranzkette.

Besonders bevorzugt ist das Leuchtmittel bzw. der Leadframe des Leuchtmittels mittels Einpresstechnik auf eine Platine bestückbar. Hierbei wird der Umstand genutzt, dass die durch das Leadframe gebildeten Beinchen bevorzugt so ausgeformt werden können, dass diese mittels Einpresstechnik auf eine Platine bestückt werden können. Durch die Einpresstechnik entfällt der sonst übliche Lötprozess. Da die Beinchen stabil genug für die etablierte Einpresstechnik sind kann das erfindungsgemäße Leuchtmittel lötfrei bestückt werden.

Das Leuchtmittel bzw. der Leadframe des Leuchtmittels ist hierbei lötfrei auf eine Platine oder eine mit Leiterbahnen versehene Partie eines Bauteils oder einer Baugruppe, beispielsweise einer Leuchte, insbesondere einer Rückleuchte für ein Kraftfahrzeug, beispielsweise ein mit Leiterbahnen versehener Träger oder eine mit Leiterbahnen versehene Partie eines Gehäuses einer solchen Leuchte, bestückbar. Hierdurch wird die Technologie einer Verwendung eines mit wenigstens einem LED-Chip bestückten und mit einem angespritzten Lichtleiter versehenen Leadframes kombiniert mit einer Möglichkeit, wie ein so entstandenes Leuchtmittel lötfrei für den elektrischen Anschluss auf eine Platine bestückt werden kann.

Eine bevorzugte Ausgestaltung des erfindungsgemäßen Leuchtmittels kennzeichnet sich durch einen mindestens zweipoligen auf die Beinchen des Leuchtmittels angesteckten Stecker oder durch auf die Beinchen des Leuchtmittels angesteckte Steckerstifte aus. Hierdurch kann das Leuchtmittel alternativ oder zusätzlich platinenfrei bestückbar sein.

Der Stecker kann beispielsweise derart ausgeformt sein, dass dieser am Leadframe oder am angespritzten Lichtleiter einrastet.

Der Stecker kann des Weiteren derart ausgeformt sein, dass er eine gute Wärmeleitfähigkeit besitzt, um die Wärme aus der LED über die Beinchen und die Steckerstifte abzuleiten. Der Kontaktbereich ist hierzu vorzugsweise mit wärmeleitendem Material, z.B. Metall ausgebildet.

Montagetechnisch birgt diese Ausformung einen weiteren Vorteil, gemäß dem das Leuchtmittel nicht nur an den Beinchen gehaltert werden kann, sondern der z.B. stab- oder vorhangförmige bzw. -artige Lichtleiter selbst kann am Gehäuse, beispielsweise einem Leuchtengehäuse oder einer Lichtscheibe, durch entsprechende Vorrichtungen gehaltert werden. Das freiliegende Leadframe, das den Kontaktbereich des erfindungsgemäßen Leuchtmittels darstellt, kann hierbei auch in ein Gehäuse verrastet werden, oder kann frei schweben. Bei der Montage einer Lichteinheit, beispielsweise einer Automobilleuchte, wird das erfindungsgemäße Leuchtmittel beispielsweise an ein Gehäuseteil angeclipst. Anschließend kann ein separater, passender Stecker auf den Kontaktbereich des Leadframes gesteckt werden. Der separate Stecker ist beispielsweise an eine Steuerplatine oder an das Bordnetz eines Automobils angebunden.

Vorteile eines an wenigstens einem Lichtleiter gehalterten Leuchtmittels, das z.B. mittels eines Steckers am Kontaktbereich des Leadframes elektrisch und thermisch kontaktiert wird sind gegenüber dem Stand der Technik z.B.:
- ein höherer Lichtstrom aufgrund einer sich durch ein dickes Leadframe ergebenden hohen Bestrombarkeit und einer effektiven Wärmeableitung über den Stecker;
- eine geringe Toleranzkette des optischen Systems;
- eine im Vergleich erhöhte Stabilität im Rütteltest, da das Leuchtmittel an mehreren Stellen gehaltert wird;
- mehrere Leuchtmittel können mittels eines Steckers kontaktiert werden, so dass der Abstand zwischen Leuchtmitteln konstant eingestellt werden kann.

Die im Vergleich erhöhte Stabilität im Rütteltest bedeutet für das erfindungsgemäße Leuchtmittel analog eine höhere Widerstandsfähigkeit gegen Vibrationen, eine höhere Lebensdauer, sowie eine geringere Ausfallwahrscheinlichkeit im Betrieb.

An das mit wenigstens einem LED-Chip bestückte Leadframe können Lichtleiter angespritzt werden, welche direkt mit dem LED-Chip verbunden sind bzw. direkt an diesen ankoppelt angespritzt sind. Auch ist denkbar, dass der LED-Chip zunächst von einem Formkörper umspritzt ist, an den wiederum ein Lichtleiter angespritzt ist. Dadurch ergeben sich zwei Ausführungsvarianten:
- der LED-Chip ist von einem Formkörper umspritzt, der wiederum von dem Lichtleiter umspritzt ist, bzw. an den der Lichtleiter angespritzt ist, oder
- der LED-Chip ist direkt von dem Lichtleiter umspritzt.

Es können auch mehrere Lichtleiter-Elemente an einem Gitter von mehreren LED-Chips angespritzt werden, so dass eine Positionierung von mehreren Lichtleitern gegeneinander einfach verwirklicht werden kann. Das Gitter besteht hierbei aus einem Leadframe, auf dem mehrere LED-Chips angeordnet und elektrisch kontaktiert sind.

Hierbei können mehrere Lichtleiter bzw. Lichtleiter-Elemente an dem Gitter bestehend aus mehreren auf einem Leadframe angeordneten und elektrisch kontaktierten LED-Chips angespritzt sein.

Das Leadframe kann entweder nach dem Positionieren und elektrischen Kontaktieren des zumindest einen LED-Chips auf dem Leadframe oder im Anschluss an das Umspritzen des mindestens einen LED-Chips derart gestanzt werden, dass die LED-Chips mit den Lichtleitern entsprechend einer gewollten Schaltung direkt in einer Parallelschaltung oder Reihenschaltung elektrisch miteinander verbunden sind.

Auch ein gleichzeitiges bzw. gemeinsames Umspritzen mehrerer LED-Chips mit einem Lichtleiter bzw. mit einem Lichtleiter-Element ist möglich, um eine homogene Ausleuchtung größerer Lichtleiter zu gewährleisten. Hierbei kommt auch wieder eine direkte oder eine indirekte Umspritzung in Frage, wobei bei der direkten der LED-Chip unmittelbar vom Lichtleiter bzw. Lichtleiter-Element umspritzt ist, und bei der indirekten der LED-Chip zunächst von einem Formkörper umspritzt ist, der wiederum, z.B. in einem anschließenden Fertigungsschritt, vom Lichtleiter bzw. Lichtleiter-Element umspritzt ist.

Das Leuchtmittel bzw. das Leadframe des Leuchtmittels kann mit mehreren Kontaktbeinchen für eine separate Ansteuerung der einzelnen LED-Chips ausgeführt werden.

Eine besonders vorteilhafte Ausgestaltung der Erfindung sieht mindestens zwei LED-Chips vor, welche Licht unterschiedlicher Wellenlänge emittieren. Das erfindungsgemäße Leuchtmittel erlaubt somit eine Kombination mehrerer Farben, wie z.B. gelb und rot, um beispielsweise Funktionsbereiche, wie etwa Nebelschlussleuchte und/oder Blinker in einer Heckleuchte zusammenzufassen.

Eine andere vorteilhafte Ausgestaltung der Erfindung ist gekennzeichnet durch mindestens zwei auf einander abgewandten Seiten des Leadframes angeordnete und elektrisch kontaktierte LED-Chips. Hierbei können zumindest zwei auf einander abgewandten Seiten des Leadframes angeordnete und elektrisch kontaktierte LED-Chips von mindestens einem zumindest einem LED-Chip zugeordneten Lichtleiter umspritzt sein. Grundsätzlich können erfindungsgemäß auch Lichtleiter in zwei Richtungen angespritzt werden, da es möglich ist einen LED-Chip auf der Vorder- und Rückseite eines Leadframes zu bestücken. Hierdurch kann das Leadframe in der Mitte einer Leuchte auf eine Platine bestückt werden. Ein deutlicher Vorteil ergibt sich hierdurch für das Lichtleiter-Design: Üblicherweise sind die LEDs an einem oder beiden Enden eines Lichtleiters positioniert. Dies erfordert jedoch eine gewisse Einbautiefe. Bei Heckleuchten ist es häufig der Fall, dass sich das Lichtleiter-Design durchgehen über Heckdeckelleuchte und Seitenwandleuchte erstreckt. Der Abstand bzw. Spalt zwischen den beiden Lichtleitern von Heckdeckel und Seitenwand soll möglichst gering gehalten werden, um einen durchgehenden Farbeindruck zu erhalten. Dies kann durch die erfindungsgemäße Lösung erreicht werden, da die LED keine Einbautiefe direkt am Rand zwischen Heckdeckel und Seitenwand aufweist, der Lichtleiter somit bis direkt an die mechanische Begrenzung angebracht werden kann.

Ein zweiter Gegenstand der Erfindung betrifft eine Leuchte mit einem zuvor beschriebenen Leuchtmittel. Bei einer insbesondere als Heckleuchte für Kraftfahrzeuge ausgeführten Leuchte mit mindestens einem hinter einer Lichtscheibe angeordneten Leuchtmittel ist demnach erfindungsgemäß vorgesehen, dass die Leuchte mindestens ein zuvor beschriebenes Leuchtmittel umfasst. Die erfindungsgemäße Leuchte erlaubt so die Vorteile des erfindungsgemäßen Leuchtmittels auf Leuchten für Kraftfahrzeuge zu übertragen und hierfür zu nutzen.

Die Leuchte kann mehrere Reflektorkammern mit jeweils eigenen Leuchtmitteln und Reflektoren aufweisen, von denen jede Reflektorkammer die Selbe oder unterschiedliche lichttechnische Funktionen erfüllt.

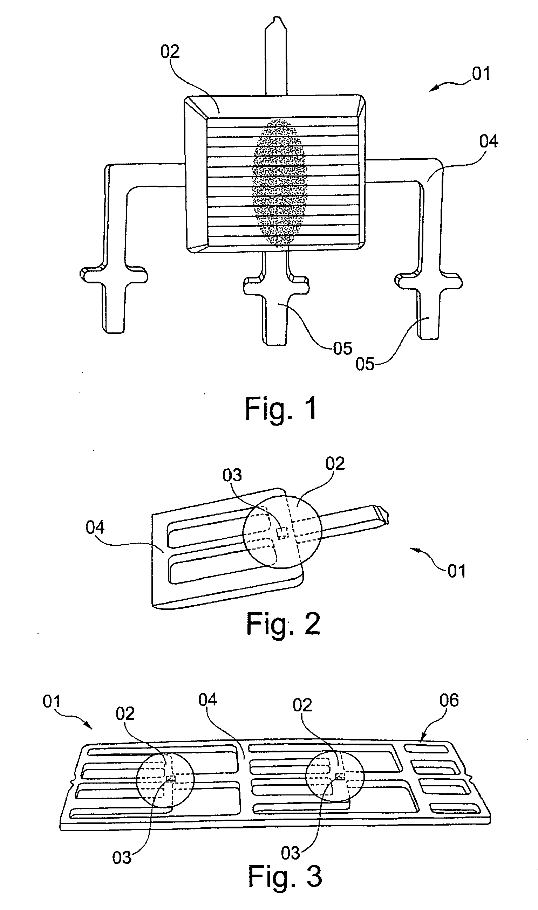

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Es zeigen:
- Fig. 1: eine schematische Darstellung eines ersten Ausführungsbeispiels eines erfindungsgemäßen Leuchtmittels in einer Draufsicht,
- Fig. 2: eine schematische Darstellung eines zweiten Ausführungsbeispiels eines erfindungsgemäßen Leuchtmittels in einer perspektivischen Ansicht;
- Fig. 3: eine schematische Darstellung eines dritten Ausführungsbeispiels eines erfindungsgemäßen Leuchtmittels in einer perspektivischen Ansicht,
- Fig. 4: eine schematische Darstellung eines vierten Ausführungsbeispiels eines erfindungsgemäßen Leuchtmittels in einer Seitenansicht,
- Fig. 5: eine schematische Darstellung eines fünften Ausführungsbeispiels eines erfindungsgemäßen Leuchtmittels in einer perspektivischen Ansicht, und
- Fig. 6: eine schematische Darstellung eines sechsten Ausführungsbeispiels eines erfindungsgemäßen Leuchtmittels in einer Seitenansicht.
Ein in den Fig. 1 bis 6 dargestelltes Leuchtmittel 01, insbesondere ein Leuchtmittel 01 für eine Leuchte für ein Kraftfahrzeug, insbesondere eine Heckleuchte, umfasst mindestens einen LED-Chip (LED: Lichtemittierende-Diode) 03 (Fig. 2, 3, 4 und 6) mit mindestens einem angespritzten Lichtleiter 02. Bei einem solchen Leuchtmittel 01 ist vorgesehen, dass der mindestens eine LED-Chip 03 auf einem Leadframe 04 angeordnet und elektrisch kontaktiert ist. Der Leadframe 04 ist wenigstens im Bereich eines LED-Chips 03 zumindest zum Teil von mindestens einem zumindest einem LED-Chip 03 zugeordneten Lichtleiter 02 umspritzt.

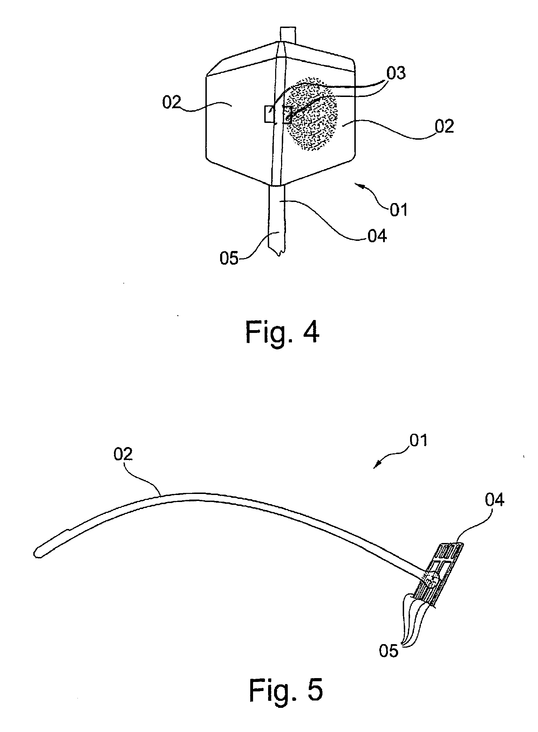

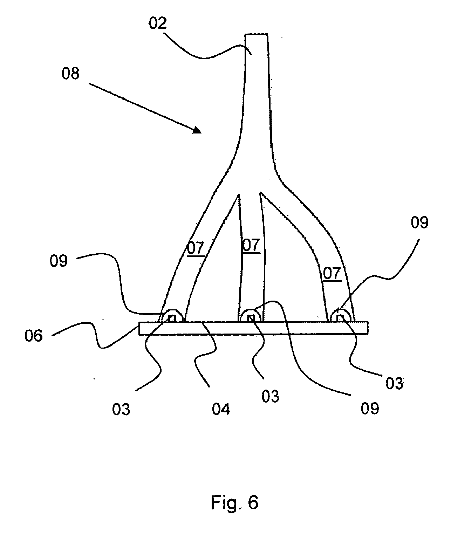

In den Fig. 1 bis 4 sind die angespritzten Lichtleiter 02 vereinfacht würfelförmig (Fig. 1 und 4) und sphärisch (Fig. 2 und 3) und stark verkürzt dargestellt, wohingegen Fig. 5 eine in etwa maßstäbliche Darstellung des Lichtleiters 02 zeigt und Fig. 6 eine in etwa maßstäbliche Darstellung eines mehrere Lichtleitereinkoppelpartien 07 zu einem Lichtleiter 02 zusammenführenden Lichtleiterabschnitts 08.

Ein in den Fig. 1 bis 6 dargestelltes erfindungsgemäßes Leuchtmittel 01 bestehend aus zumindest einem von wenigstens einem Lichtleiter 02 bzw. Lichtleiter-Element umspritzten LED-Chip 03, der zu dessen elektrischer Kontaktierung auf einem Leadframe 04 positioniert ist, kann mittels Spritzgusstechnologie hergestellt werden. Die Spritzgusstechnologie ermöglicht eine flexible Wahl des Leadframes 04. Durch das Leadframe 04 weist das Leuchtmittel 01 im Vergleich zu herkömmlichen Leuchtdioden verstärkte Beinchen 05 auf. Durch die verstärkten Beinchen 05 wird eine verbesserte Wärmeabfuhr bzw. Kühlung des LED-Chips 03 erreicht, wodurch das Leuchtmittel 01 im Vergleich zu herkömmlichen Leuchtdioden eine geringere thermische Degradation aufweist. Durch die verstärkten Beinchen 05 ist es bei dem Leuchtmittel 01 außerdem auch möglich, den LED-Chip 03 im Vergleich zu herkömmlichen Leuchtdioden höher zu bestromen, weil durch die relativ dicken Beinchen 05 eine im Vergleich bessere Wärmeabfuhr bzw. Kühlung des LED-Chips 03 erfolgt. Wegen der verstärkten Beinchen 05 können auch besonders lichtstarke LED-Chips 03 bei dem Leuchtmittel 01 Verwendung finden, die hoch bestromt werden können. Die verstärkten Beinchen 05 lassen aufgrund ihres geringen elektrischen Widerstands eine besonders hohe Bestromung zu, so dass das Leuchtmittel 01 für spezielle Anwendungen hoher Lichtstärke ausgelegt werden kann. Darüber hinaus wird durch die verstärkten Beinchen 05 eine besonders hohe mechanische Stabilität des Leuchtmittels 01 erhalten, wodurch das Leuchtmittel z.B. während der Bestückung einfach handhabbar und genau ausricht- bzw. positionierbar ist.

Es können somit für die elektrische Kontaktierung des LED-Chips 03 vorgesehene Beinchen 05 mit im Vergleich zum Stand der Technik höherer Stärke umspritzt werden, was neben der höheren möglichen Bestromung auch zu einer höheren mechanischen Stabilität des gesamten Bauelementes an sich bestehend aus einem erfindungsgemäßen Leuchtmittel 01 führt.

Zusätzlich können die Beinchen 05 so ausgeformt werden, dass diese mittels Einpresstechnik lötfrei z.B. auf eine Platine oder auf eine mit Leiterbahnen versehene Partie eines Bauteils, beispielsweise eines Gehäuses oder eines Trägers einer Leuchte, bestückt werden können. Durch die Einpresstechnik entfällt der sonst übliche Lötprozess. Da die Beinchen 05 stabil genug für die etablierte Einpresstechnik sind kann das Leuchtmittel 01 dadurch lötfrei z.B. auf eine Platine bestückt werden.

An das mit wenigstens einem LED-Chip 03 bestückte Leadframe 04 können ein oder mehrere Lichtleiter 02 angespritzt sein, welche direkt mit dem zumindest einen LED-Chip 03 verbunden bzw. direkt an diesen ankoppelt angespritzt sind, oder welche indirekt mit dem mindestens einen LED-Chip 03 verbunden bzw. indirekt an diesen ankoppelt angespritzt sind. Im Falle einer indirekten Umspritzung ist der LED-Chip 03 zunächst von einem Formkörper umspritzt, an den wiederum ein Lichtleiter 02 angespritzt ist.

Es können auch wie in Fig. 3 schematisch dargestellt mehrere Lichtleiter 02 bzw. Lichtleiter-Elemente 02 an einem Gitter 06 von mehreren LED-Chips 03 angespritzt sein. Das Gitter 06 besteht hierbei aus einem Leadframe 04, auf dem mehrere LED-Chips 03 angeordnet und elektrisch kontaktiert sind. Sich hieraus ergebende Vorteile sind, dass dadurch einfach eine genaue Positionierung von mehreren Lichtleitern 02 gegeneinander verwirklicht werden kann. Bei einer in Fig. 3 dargestellten Ausgestaltung eines erfindungsgemäßen Leuchtmittels 01 mit Gitter 06 kann das Leadframe 04 entweder nach dem Positionieren und elektrischen Kontaktieren der LED-Chips 03 auf dem Leadframe 04 oder im Anschluss an das Umspritzen der LED-Chips 03 mit dem mindestens einen Lichtleiter 02 derart gestanzt werden, dass die LED-Chips 03 mit dem wenigsten einen Lichtleiter 02 entsprechend einer gewollten Schaltung direkt in einer Parallelschaltung oder Reihenschaltung elektrisch miteinander verbunden sind.

Grundsätzlich können wie in Fig. 4 angedeutet erfindungsgemäß auch Lichtleiter 02 in zwei Richtungen an einen LED-Chip 03 angespritzt werden, da es möglich ist, einen LED-Chip 03 auf der Vorder- und Rückseite eines Leadframes 04 zu bestücken.

Ebenso ist denkbar, bei einem Leuchtmittel 01 mindestens zwei auf einander abgewandten Seiten des Leadframes 04 angeordnete und elektrisch kontaktierte LED-Chips 03 vorzusehen (Fig. 4). Die LED-Chips 03 können von mindestens einem zumindest einem LED-Chip 03 zugeordneten Lichtleiter 02 umspritzt sein.

Auch ein gleichzeitiges bzw. gemeinsames Umspritzen mehrerer LED-Chips 03 ist möglich, um eine homogene Ausleuchtung größerer Lichtleiter 02 zu gewährleisten.

Das Leuchtmittel 01 bzw. das Leadframe 04 des Leuchtmittels 01 kann wie in Fig. 5 dargestellt mit mehreren Kontaktbeinchen 05 für eine separate Ansteuerung der einzelnen LED-Chips 03 ausgeführt werden.

Ein in Fig. 6 dargestelltes Leuchtmittel 01 mit mindestens einem Lichtleiter 02 und wenigstens zwei Licht in diesen Lichtleiter 02 einkoppelnden, mit dem Lichtleiter 02 verbundenen LED-Chips 03 kennzeichnet sich dadurch aus, dass die Licht in den Lichtleiter 02 einkoppelnden LED-Chips 03 auf einem gemeinsamen Leadframe 04 z.B. zu einem Gitter 06 angeordnet und elektrisch kontaktiert sind. Das in Fig. 6 dargestelltes Leuchtmittel 01 hat einen Lichtleiter 02 mit einem Lichtleiterabschnitt 08, der mehrere Lichtleitereinkoppelpartien 07 aufweist. Dabei ist je LED-Chip 03 eine Lichtleitereinkoppelpartie 07 vorgesehen. Mit dem Lichtleiter 02 bzw. mit den Lichtleitereinkoppelpartien 07 des Lichtleiterabschnitts 08 des Lichtleiters 02 sind so mehrere auf einem Leadframe 04 angeordnete LED-Chips 03 direkt umspritzt.

Die LED-Chips 03 können jedoch auch indirekt umspritzt sein, wobei der Lichtleiter 02 bzw. die Lichtleitereinkoppelpartien 07 des Lichtleiterabschnitts 08 des Lichtleiters 02 an Formkörper 09 angespritzt sind, mit welchen Formkörpern 09 die auf dem Leadframe 04 zu einem Gitter 06 ,angeordneten LED-Chips 03 zunächst umspritzt sein können.

Ein solches gleichzeitiges bzw. gemeinsames direktes oder indirektes Umspritzen mehrerer LED-Chips 03 mit einem Lichtleiter 02 bzw. mit einem Lichtleiter-Element 02 ist z.B. denkbar, um eine homogene Ausleuchtung größerer Lichtleiter 02 zu gewährleisten. Der Lichtleiterabschnitt 08 dient dabei dem Zusammenführen der Lichtleitereinkoppelpartien 07 bzw. dem Aufteilen des Lichtleiters 02 auf die LED-Chips 03.

Wichtig ist hervorzuheben, dass es alternativ oder zusätzlich denkbar ist, mehrere LED-Chips 03 vorzusehen, welche Licht unterschiedlicher Wellenlänge emittieren. Hierdurch wird eine Kombination mehrerer Farben erhalten, wie z.B. gelb und rot, um beispielsweise Funktionsbereiche, wie etwa Nebelschlussleuchte und/oder Blinker in einer Heckleuchte zusammenzufassen.

Grundsätzlich ist der Vorteil eines im Vergleich zu den Beinchen herkömmlicher Leuchtdioden dickeren Leadframes 04 immer zweifach: einmal eine höhere mechanische Stabilität, andererseits entsteht ein thermischer Vorteil. Durch eine bessere Wärmeableitung über dickere Leadframes 04 ist die Erwärmung des LED-Chips 03 geringer. Diese geringere Erwärmung kann entweder genutzt werden um des LED-Chip 03 höher zu bestromen, was zu einer höheren Intensität des ausgestrahlten Lichts führt, oder bei gleicher Bestromung verbessert sich die Intensitätsdegradation, da die Chip-Intensität bei steigender Temperatur sinkt.

Zusammengefasst bietet die Erfindung eine Vielzahl von Vorteilen gegenüber dem Stand der Technik. Diese Vorteile sind beispielsweise:
- Das Leuchtmittel ist lötfrei bestückbar.
- Aufgrund der durch das im Vergleich zu herkömmlichen Beinchen dicke Leadframe möglichen höheren Bestrombarkeit kann ein hoher Lichtstrom erzielt werden.
- Das Leuchtmittel ist mittels Einpresstechnik bestückbar, wodurch im Vergleich zu mit Beinchen versehenen Leuchtdioden mit angespritzten Lichtleitern keine speziellen Bestücker oder Spezialanlagen notwendig sind.
- Die Toleranzkette ist sehr gering, was zu einer hohen optischen Effizienz des Gesamtsystems führt.
- Mehrere Lichtleiter können an einem als Gitter bezeichneten Leadframe, der mit mehreren LED-Chips bestückt ist, angespritzt werden, so dass die Positionierung mehrerer Lichtleiter-Elemente gleichzeitig mit einem Einpressvorgang möglich ist.

Die Erfindung ist insbesondere im Bereich der Herstellung von Leuchten für Kraftfahrzeuge gewerblich anwendbar.

### Bezugszeichenliste

- 01: Leuchtmittel
- 02: Lichtleiter
- 03: LED-Chip
- 04: Leadframe
- 05: Beinchen
- 06: Gitter
- 07: Lichtleitereinkoppelpartie
- 08: Lichtleiterabschnitt
- 09: Formkörper

## Patentansprüche

1. Leuchtmittel (01) mit mindestens einem LED-Chip (03; LED: Lichtemittierende-Diode) und mindestens einem angespritzten Lichtleiter (02),
**dadurch gekennzeichnet,**
**dass** der mindestens eine LED-Chip (03) auf einem Leadframe (04) angeordnet und elektrisch kontaktiert ist, welcher Leadframe (04) wenigstens im Bereich eines LED-Chips (03) zumindest zum Teil von mindestens einem zumindest einem LED-Chip (03) zugeordneten Lichtleiter (02) umspritzt ist.

2. Leuchtmittel nach Anspruch 1,
**dadurch gekennzeichnet,**
**dass** das Leuchtmittel (01) mittels Einpresstechnik auf eine Platine bestückbar ist.

3. Leuchtmittel nach Anspruch 1 oder 2,
**gekennzeichnet durch**
einen mindestens zweipoligen auf die Beinchen (05) des Leuchtmittels (01) angesteckten Stecker.

4. Leuchtmittel nach Anspruch 3,
**dadurch gekennzeichnet,**
**dass** der Stecker am Leadframe (04) oder am Lichtleiter (02) einrastet.

5. Leuchtmittel nach einem der vorhergehenden Ansprüche,
**dadurch gekennzeichnet,**
**dass** der LED-Chip (03) von einem Formkörper (09) umspritzt ist, der wiederum von dem Lichtleiter (02) umspritzt ist.

6. Leuchtmittel nach einem der Ansprüche 1 bis 4,
**dadurch gekennzeichnet,**
**dass** der LED-Chip (03) direkt von dem Lichtleiter (02) umspritzt ist.

7. Leuchtmittel nach einem der vorhergehenden Ansprüche,
**gekennzeichnet durch**
ein Gitter (06) bestehend aus mehreren auf einem Leadframe (04) angeordneten und elektrisch kontaktierten LED-Chips (03).

8. Leuchtmittel nach Anspruch 7,
**dadurch gekennzeichnet,**
**dass** mehrere Lichtleiter (02) an einem Gitter (06) angespritzt sind.

9. Leuchtmittel nach Anspruch 7 oder 8,
**dadurch gekennzeichnet,**
**dass** das Leadframe (04) derart gestanzt ist, das die LED-Chips (03) entsprechend einer Parallelschaltung oder Reihenschaltung direkt miteinander elektrisch verbunden sind.

10. Leuchtmittel nach Anspruch 7, 8 oder 9,
**dadurch gekennzeichnet,**
**dass** mehrere LED-Chips (03) von einem Lichtleiter (02, 07, 08) gemeinsam umspritzt sind.

11. Leuchtmittel nach einem der Ansprüche 7 bis 10,
**dadurch gekennzeichnet,**
**dass** das Leadframe (04) mit mehreren Kontaktbeinchen (05) für eine separate Ansteuerung mehrerer LED-Chips (03) versehen ist.

12. Leuchtmittel nach einem der Ansprüche 7 bis 11,
**gekennzeichnet durch**
mindestens zwei LED-Chips (03), welche Licht unterschiedlicher Wellenlänge emittieren.

13. Leuchtmittel nach einem der Ansprüche 7 bis 12,
**gekennzeichnet durch** mindestens zwei auf einander abgewandten Seiten des Leadframes (04) angeordnete und elektrisch kontaktierte LED-Chips (03).

14. Leuchtmittel nach Anspruch 13,
**dadurch gekennzeichnet,**
**dass** zumindest zwei auf einander abgewandten Seiten des Leadframes (04) angeordnete und elektrisch kontaktierte LED-Chips (03) von mindestens einem zumindest einem LED-Chip (03) zugeordneten Lichtleiter (02) umspritzt sind.

15. Leuchte mit mindestens einem hinter einer Lichtscheibe angeordneten Leuchtmittel (01),
**gekennzeichnet durch**
mindestens ein Leuchtmittel (01) nach einem der vorhergehenden Ansprüche.
